# EUROPÄISCHE PATENTANMELDUNG

(11) **EP 0 531 892 A1**
(43) Veröffentlichungstag der Anmeldung: **17.03.1993**
(21) Anmeldenummer: 92115105.6
(22) Anmeldetag: 03.09.1992
(51) Int. Cl.: B60B 7/00

(54) **Innere Schmutzschutz-Abdeckscheibe für Kraftfahrzeugradfelge bzw. mit einer solchen Abdeckscheibe versehene Felge, insbesondere Leichtmetallfelge**

(30) Priorität: 07.09.1991 DE 9111113 U; 11.03.1992 DE 9203281 U
(71) Anmelder: UNIT MOTORSPORT GmbH, D-86551 Aichach (DE)
(72) Erfinder: Brender, Wolfgang, W-8890 Aichach (DE)

(57) **Zusammenfassung**

Die Erfindung betrifft eine Felge für Kraftfahrzeugräder, insbesondere Leichtmetallräder, die zwischen Nabenteil (11) und Felgenkranz (13) einen mit Durchbrüchen (15) versehenen Radscheibenteil (14) aufweisen, wobei eine an der Felgeninnenseite (1B) angeordnete, mit der Felge (1) verbundene bzw. verbndbare Abdeckscheibe (3), vorgesehen ist, die sich radial mindestens über die radiale Breite des Radscheibenteils (14) der Felge erstreckt und die Durchbrüche (15) des Radscheibenteils mindestens im wesentlichen überdeckt.

## Beschreibung

Bei Feigen für Kraftfahrzeugräder ist der zwischen dem Nabenbereich der Felge, der mit Schraubenlöchern versehen ist und zur Befestigung an der Fahrzeugachse dient, und dem zur Aufnahme des Reifens dienenden Felgenkranz verlaufende Radscheibenteil der Felge üblicherweise mit Durchbrüchen versehen. Bei Stahlfelgen sind dies meist runde Löcher. Leichtmetallfelgen jedoch werden in einer Vielzahl verschiedener Radscheibendesigns mit teils einfacherer, teils aber recht komplizierter, etwa einer Speichenkonstruktion nachempfundener Gestaltung angeboten und haben deshalb häufig auch entsprechend viele und dazu noch kompliziert geformte Durchbrüche mit spitzwinkligen Ecken und dgl.

Diese zur Radinnenseite hin offenen Durchbrüche sind nicht nur der Verschmutzung durch Straßenstaub und dgl. ausgesetzt, sondern insbesondere auch der Verschmutzung durch Bremsstaub, der bei jedem Bremsvorgang entsteht und wegen der unmittelbaren Nachbarschaft der Fahrzeugbremsen zur Felge zu diese hingelangt und sich an den Wänden der Felgendurchbrüche absetzt, sich dort mit der Zeit regelrecht einbrennen kann und über eine bloße Verschmutzung hinaus auch Korrosion bzw. eine Beschädigung der Felgenoberfläche hervorrufen kann.

Während der Straßenstaub umproblematisch ist und sich leicht entfernen läßt, ist der Bremsstaub außerordentlich aggressiv, weshalb auch die Oberfläche der Felge mit der Zeit stark in Mitleidenschaft gezogen und in ihrer Materialsubstanz angegriffen wird. Dieser aggressive Bremsstaub haftet deshalb auch außerordentlich fest an den betroffenen Flächen an und läßt sich schwer entfernen, wozu aber scharfe chemische Reinigungsmittel notwendig sind, und außerdem trägt die häufig komplizierte Gestalt der Durchbrüche mit vielleicht spitzwinkligen Ecken und großer Tiefe aufgrund relativ großer Dicke der Leichtmetallradscheibe wegen der dadurch bedingten schlechten Zugänglichkeit der zu reinigenden Flächen dazu bei, daß das Reinigen der Feigen eine schwierige und unangenehme Arbeit ist.

Wer sich Leichtmetfallfelgen anschafft, legt aber auch gesteigerten Wert auf sauberes Aussehen der Feigen, was deren häufige Reinigung erfordert und wegen der schon erwähnten Notwendigkeit der Verwendung starker chemischer Reinigungsmittel noch dazu eine erhebliche Umweltbelastung bedeutet.

Der Erfindung liegt daher die Aufgabe zugrunde, diesem Verschmutzungsproblem der Feigen abzuhelfen.

Die Lösung dieser Aufgabe besteht erfindungsgemäß darin, die Felge auf der Radscheibeninnenseite mit einer den von der Radinnenseite her kommenden Schmutz abhaltenden Abdeckscheibe zu versehen, wie im Schutzanspruch 1 gekennzeichnet und in den Unteransprüchen in vorteilhfater Weise weiter ausgestaltet ist. Dabei kann die Abdeckscheibe als separates Bauteil zum Aufsetzen an der Felgeninnenseite oder direkt mit der Felge integriert ausgebildet sein.

Wegen Einzelheiten der Erfindung wird auf die sich anschließende Beschreibung zweier Ausführungsbeispiele Bezug genommen, welche die Erfindung anhand der anliegenden Zeichnungen näher erläutert. In den Zeichnungen zeigt:
- Fig. 1: in auseinandergezogener Darstellung einen Axialschnitt durch ein Kraftfahrzeugrad mit Abdeckscheibe,
- Fig. 2: einen Axialschnitt durch das Rad mit an der Felge befestigter Abdeckscheibe,
- Fig. 3: eine ausschnittweise Ansicht der Abdeckscheibe nach den Fig. 1 und 2,
- Fig. 4: eine Darstellung ähnlich Fig. 1 mit einer weiteren Ausführungsform der Abdeckscheibe, und
- Fig. 5: eine ausschnittweise Teilansicht der Abdeckscheibe nach Fig. 4.

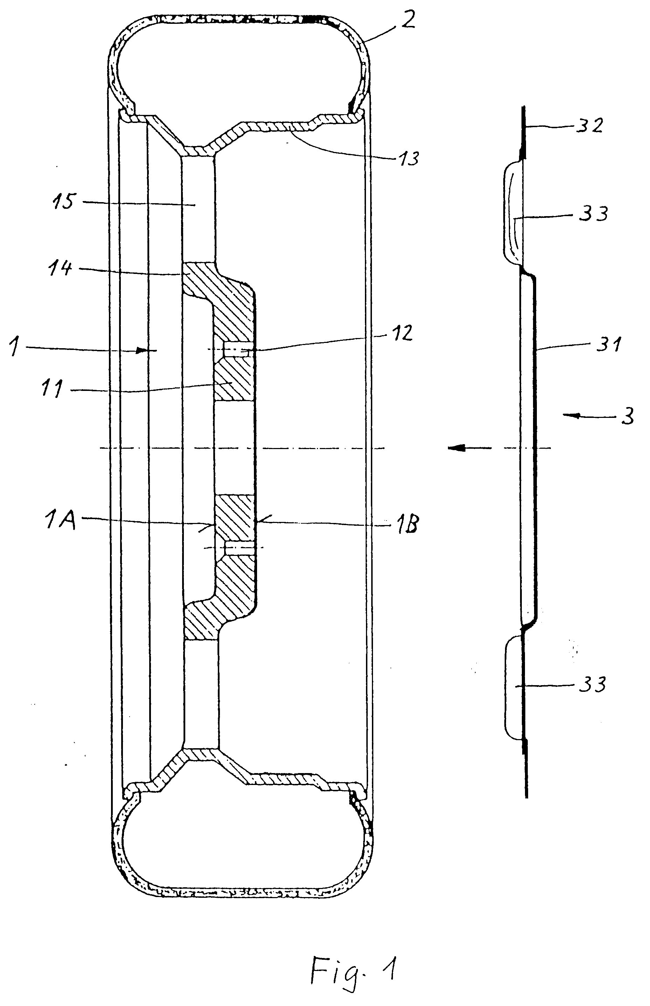

Aus Gründen der Klarheit und der leichten Verständlichkeit ist in den Fig. 1, 2 und 4 die Felge 1 des Rads nur sehr schematisch und in ganz einfacher Gestaltung dargestellt. Sie weist einen Nabenbereich 11 mit Schraubenlöchern 12 zur Befestigung des Rads an der Fahrzeugachse, einen Felgenkranz 13 zur Aufnahme eines Reifens 2, und einen dazwischen verlaufenden Radscheibenteil 14 mit Durchbrüchen 15 auf. Die Lage des Radscheibenteils 14 mit Bezug auf den Felgenkranz 13 sowie die Ansenkung der Schraubenlöcher 12 lassen bereits die eine Felgenseite 1A als Radaußenseite und die andere Felgenseite 1B als Radinnenseite erkennen.

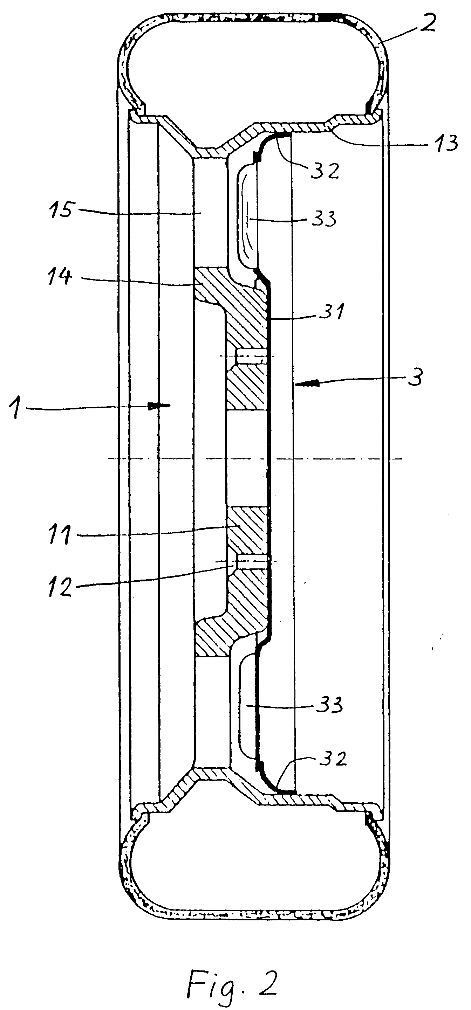

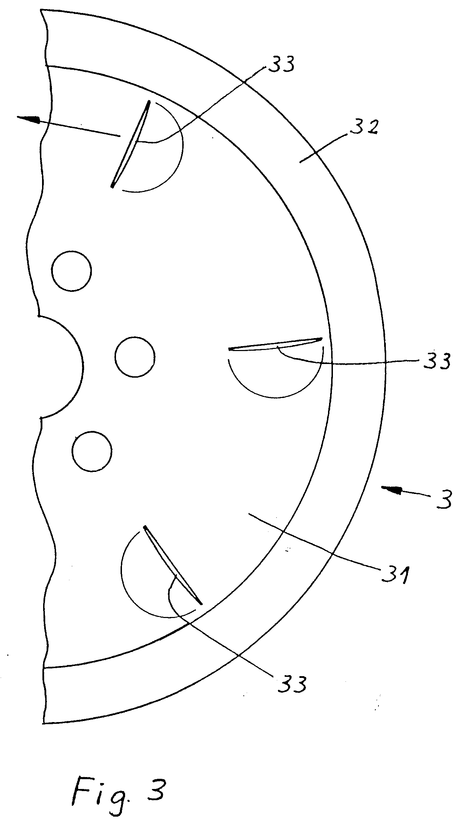

Gemäß einer ersten Ausführungsform der Erfindung ist an der Radinnenseite die aus den Fig. 1 und 3 näher ersichtliche Abdeckscheibe 3 mit der Felge 1 zu der aus Fig. 2 ersichtlichen Einheit verbunden.

Die Abdeckscheibe 3 weist einen vorzugsweise aus Metall bestehenden Scheibenkörper 31, der durch Tiefziehen und Stanzen der Felgeninnenkontur wenigstens im wesentlichen angepaßt ist, und eine im Randbereich umlaufend aufvulkanisierte Gummilasche 32 auf.

Es versteht sich von selbst, daß der Scheibenkörper 31 zweckmäßig in einer solchen Weise gestaltet wird, daß die Abdeckscheibe einer einer möglichst großen Anzahl verschiedener Felgentypen gleichermaßen eingesetzt werden kann. Die elastische umlaufende Gummilasche 32 kann sich in der aus Fig. 2 ersichtlichen Weise der Umfangskontur des Felgenkranzes anpassen und elastisch an dessen Innenoberfläche anschmiegen, wobei eine mehr oder weniger starke Ausbiegung erfolgt, so daß diese Gummilasche die Verwendung der Abdeckscheibe wiederum bei einer Vielzahl unterschiedlicher Felgen-Design zuläßt.

Wie aus Fig. 1 und insbesondere aus Fig. 3 ersichtlich ist, weist der Scheibenkörper 31 der Abdeckscheibe vorzugsweise eingestanzte Lüftungsöffnungen 33 auf, die den Luftdurchtritt zur Bremsanlage und zu deren Kühlung zulassen. Die in Raddrehrichtung (bei Vorwärtsfahrt) weisenden und gewissermaßen wie Schöpflöffel geformten Lüftungsöffnungen wirken bei sich drehendem Rad wie ein Lüftungspropeller, der der Bremsanlage aktiv Kühlluft zuführt, während gleichzeitig eben aufgrund dieser Wirkung der Durchtritt von Bremsstaub zur Felge hin ebenso aktiv unterbunden wird. Jedoch können schöpflöffeartige Schalen zur Herstellung der Lfütungsöffnungen 33 auch als separate Teile aus anderem Material wie der Scheibenkörper gefertigt und mit dem Scheibenkörper verklebt oder sonst verbunden sein, der dann nur entsprechende Stanzöffnungen haben muß.

Zur Verbindung der Abdeckscheibe 3 mit der Felge 1 bieten sich unterschiedliche Verfahren an, die nicht im einzelnen dargestellt sind, da sie für sich für den Fachmann ohne weiteres nachvollziehbar sind.

Eine erste Möglichkeit besteht in einem einfachen Aufstecken der Abdeckscheibe auf die Innenseite der Felge, wobei die Abdeckscheibe bei der Montage des Rades an der Achse fest zwischen der achsfesten Nabe und der Felge eingespannt ist und im übrigen durch die Radbefestigungsschrauben, die durch entsprechende Bohrungen oder Schlitze oder dgl. des inneren Bereichs des Scheibenkörpers hindurchverlaufen, drehfest auf der Felge sitzt.

Eine weitere Möglichkeit besteht darin, daß im Umfangsbereich des Nabenteils der Felge ein Gewinde eingefräst wird, auf welches die Abdeckscheibe mit einem entsprechenden Gegengewinde aufschraubbar ist.

Eine weitere Verbindungsmöglichkeit arbeitet mit Bolzen oder Stiften, welche den Scheibenkörper in dem schrägen Umfangsschulterbereich des Nabenteils 11 der Felge an deren Innenseite mit der Felge verbinden und in entsprechend eingebohrte Bohrungen der Nabenteil-Umfangsschulter eingreifen.

Zusätzlich zur eben dargestellten Verbindungsmöglichkeit oder alternativ dazu ist auch eine Einspannung oder Befestigung des Scheibenkörpers in dessen Randbereich bei dreiteiligen Felgen möglich, und zwar über die äußere Verschraubung der Felgenteile mit dazwischen eingespannter Abdeckscheibe. In diesem Fall hat die Abdeckscheibe nur einen metallenen oder jedenfalls starren Scheibenkörper ohne eine äußere Gummilasche.

Eine weitere zweckmäßige Verbindungsmöglichkeit ist die Klebeverbindung, bei welcher die Abdeckscheibe mit einem Spzialkleber fest mit der Anlagefläche des Nabenteils 11 der Felge verbunden wird.

Schließlich besteht auch die Möglichkeit, die Abdeckscheibe bei Leichtmetallfelgen beim Gießen des Rades einzugießen oder als integrales Bestandteil des Gußkörpers anzugießen oder bei mehrteiligen Felgen in entsprechend eingegossene Umfangsnuten mindestens eines der Felgenteile einzusetzen.

Aus den oben dargestellten Verbindungsmöglichkeiten ergibt sich bereits, daß die Abdeckscheibe einen sich radial einwärts bis zum Achszapfen erstreckenden Scheibenkörper haben kann, wobei natürlich entsprechende Durchbrüche für die Radbefestigungsschrauben vorhanden sein müssen, oder der Scheibenkörper im wesentlichen auf die radiale Ausdehnung des Radscheibenteils 14 der Felge beschränkt sein kann, also als Ringscheibe ausgebildet sein kann.

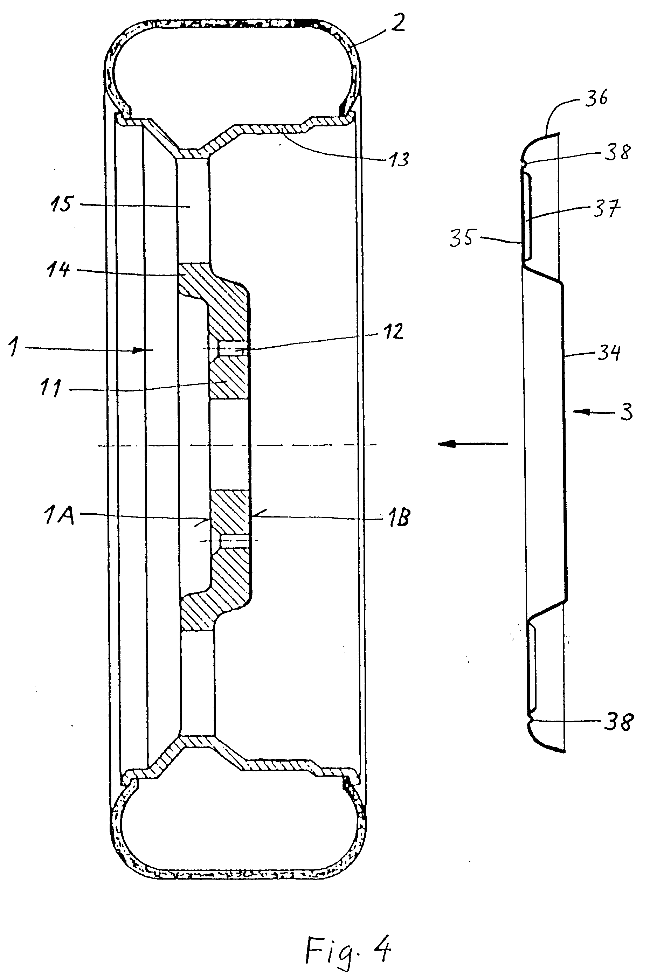

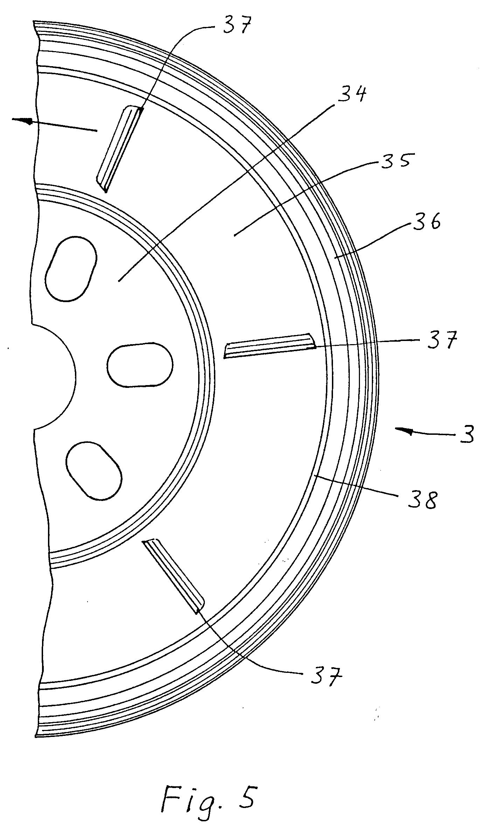

Die Fig. 4 und 5 zeigen eine weitere Ausführungsform der Erfindung mit einer einstückig aus dünnem Blech, beispielsweise Aluminiumblech oder Stahlblech, formgestanzten Abdeckscheibe 3. Während die Abdeckscheibe nach den Fig. 1 bis 3 aus einem starren Scheibenkörper und einem weichelastischen Randteil besteht, ist die Abdeckscheibe bei dieser Ausführungsform insgesamt als einstückiges, starres gestanztes und tiefgezogenes Blechteil ausgebildet und weist einen ebenen mittigen Scheibenteil 34 mit einem Kranz von (hier als radial verlaufende Langlöcher dargestellt) Schraubendurchführungsöffnungen für die Radschrauben, weiter einen entsprechend der Felgenkontur auswärts vorspringenden tiefgezogenen äußeren Scheibenteil 35 und einen einwärts zurückgebogenen Randteil 36 auf.

Der äußere Scheibenteil weist wiederum Lufteintrittsöffnungen auf, die als eingestanzte Öffnungen 37 ausgebildet sind und sich von der Ausführungsform nach den Fig. 1 bis 3 dadurch unterscheiden, daß sie nicht zur Radaußenseite, sondern zur Radinnenseite hin weisend orientiert sind. Während bei der Ausführungsform nach den Fig. 1 bis 3 die Lufteintrittsöffnungen als zur Radaußenseite hin vorspringende napfförmige Ausbauchungen mit in Raddrehrichtung weisenden Eintrittsöffnungen ausgebildet sind, die also wie Schöpflöffel wirken, sind bei der Ausführungsform nach den Fig. 4 und 5 die Lufteintrittsöffnungen 37 als zur Radinnenseite hin etwas vorspringende, rampenförmige Ausstanzungen mit entgegen der Raddrehrichtung weisenden Eintrittsschlitzöffnungen ausgebildet. Bei drehendem Rad wirken diese Lufteintrittsöffnungen nach dem Saugstrahlpumpenprinzip.

Diese Ausführungsform der Abdeckscheibe nach den Fig. 4 und 5 weist gegenüber der Ausführungsform nach den Fig. 1 bis 3 zwei Vorteile auf, nämlich einerseits, daß der äußere Scheibenteil 35 bis in Anlage an den Radscheibenteil 14 der Felge vorgewölbt sein kann und damit die Durchbrüche 15 des Radscheibenteils direkt abdecken kann, und daß andererseits die zur Radinnenseite hin eingestanzten Lufteintrittsöffnungen 36 ihrem optischen Erscheinungsbild nach noch gefälliger als die zur Radaußenseite hin vorgewölbten Lufteintrittsöffnungen 33 bei der Ausführungsform nach den Fig. 1 bis 3 sind. Die bei dieser Ausführungsform mögliche stärkere Vorwölbung des äußeren Scheibenteils 35 vergrößert außerdem noch die Eigensteifigkeit der Abdeckscheibe, so daß diese auch aus sehr dünnem Blech mit hoher Eigensteifigkeit hergestellt werden kann. Der Wegfall der Notwendigkeit des Aufvulkanisierens eines flexiblen Randteils vereinfacht die Herstellung.

Zur weiteren Verbesserung der Eigensteifigkeit ist der Umfang des ebenen mittigen Scheibenteils 34 außerdem noch mit einer umlaufenden Ringsicke 38 versehen.

Die Erfindung hat nicht nur bei Leichtmetallfelgen Bedeutung, bei denen keine Radkappen verwendet werden, sondern auch bei herkömmlichen Stahlfelgen, nämlich dann, wenn Radkappen nur zur Abdeckung des radial inneren Felgenbereichs mit den Radbefestigungsschrauben vorgesehen sind, während der radial weiter außenliegende Scheibenteil der Felge mit den Durchbrüchen freiliegt und damit sichtbar ist.

## Patentansprüche

1. Felge für Kraftfahrzeugräder, insbesondere Leichtmetallräder, die zwischen Nabenteil (11) und Felgenkranz (13) einen mit Durchbrüchen (15) versehenen Radscheibenteil (14) aufweisen, gekennzeichnet durch eine an der Felgeninnenseite (1B) angeordnete, mit der Felge (1) verbundene bzw. verbindbare Abdeckscheibe (3), die sich radial mindestens über die radiale Breite des Radscheibenteils (14) der Felge erstreckt und die Durchbrüche (15) des Radscheibenteils mindestens im wesentlichen überdeckt.

2. Felge nach Anspruch 1, dadurch gekennzeichnet, daß die Abdeckscheibe (3) aus einem starren Scheibenkörper (31) und einem an dessen Umfang umlaufend angeordneten weichelastischen Randteil (32) besteht.

3. Felge nach Anspruch 2, dadurch gekennzeichnet, daß der Scheibenkörper (31) aus Leichtmetallblech besteht und der Randteil (32) eine am Randbereich des Scheibenkörpers aufvulkanisierte Gummilasche ist.

4. Felge nach Anspruch 1, dadurch gekennzeichnet, daß die Abdeckscheibe (3) als einstückiges Blechstanzteil mit am Umfang des Scheibenkörpers (34, 35) angeformtem bogenförmig zurückgewölbtem Randteil (36) ausgebildet ist.

5. Felge nach Anspruch 4, dadurch gekennzeichnet, daß der Scheibenkörper der Abdeckscheibe (3) einen im wesentlichen ebenen mittigen Scheibenteil (34) und einen zum Radscheibenteil (14) der Felge hin vorspringenden tiefgezogenen äußeren Scheibenteil (35) aufweist, an welch letzteren sich außen der bogenförmig zurückgewölbte Randteil (36) anschließt.

6. Felge nach Anspruch 4 oder 5, dadurch gekennzeichnet, daß der Scheibenkörper (34, 35) der Abdeckscheibe (3) durch mindestens eine Ringsicke (38) versteift ist.

7. Felge nach einem der Ansprüche 1 bis 6, dadurch gekennzeichnet, daß der Scheibenkörper (31, 34, 35) der Abdeckscheibe (3) im Radialbereich der Durchbrüche (15) des Felgen-Radscheibenteils angeordnete eingestanzte oder eingepreßte Lufteintrittsöffnungen (33) aufweist, die als zur Felge hin vorspringende napfförmige Ausbauchungen des Scheibenkörpers mit in Raddrehrichtung weisenden Öffnungen ausgebildet sind.

8. Felge nach einem der Ansprüceh 1 bis 6, dadurch gekennzeichnet, daß der Scheibenkörper (31, 34, 35) der Abdeckscheibe (3) im Radialbereich der Durchbrüche (15) des Felgen-Radscheibenteils angeordnete eingestanzte oder eingepreßte Lufteintrittsöffnungen (36) aufweist, die als von der Felge weg zurückspringende Ausbuchtungen des Scheibenkörpers mit entgegen der Raddrehrichtung weisenden Öffnungen ausgebildet sind.

9. Felge nach einem der Ansprüche 1 bis 8, dadurch gekennzeichnet, daß die Abdeckscheibe (3) mit ihrem radial inneren Teil an der Anlagefläche des Felgen-Nabenteils (11) aufgeklebt ist.

10. Felge nach einem der Ansprüche 1 bis 8, dadurch gekennzeichnet, daß die Abdeckscheibe (3) durch Verstiften oder Verschrauben mit dem Umfangsschulterbereich des Felgen-Nabenteils (11) verbunden ist.

11. Felge nach einem der Ansprüche 1 bis 8, dadurch gekennzeichnet, daß der Umfangsschulterbereich des Felgen-Nabenteils (11) mit einem Außengewinde versehen und die Abdeckscheibe (3) mit einem entsprechenden Gegengewinde darauf aufgeschraubt ist.

12. Felge nach einem der Ansprüche 1 bis 8, dadurch gekennzeichnet, daß die Abdeckscheibe (3) auf die Felge (1) aufgesteckt ist.

13. Felge nach Anspruch 1, 7 oder 8, dadurch gekennzeichnet, daß die nur aus einem Scheibenkörper bestehende Abdeckscheibe durch Eingießen in den Felgenkörper mit der Felge verbunden ist.

14. Felge nach Anspruch 1, 7 oder 8, dadurch gekennzeichnet, daß die Abdeckscheibe durch Angießen eines Scheibenkörpers einstückig mit dem Felgenkörper der Felge ausgebildet ist.

15. Zur Verwendung an der Innenseite einer Felge für Kraftfahrzeugräder bestimmte Abdeckscheibe (3) mit dem Merkmalen nach einen der Ansprüche 2 bis 8.
